# EUROPÄISCHE PATENTSCHRIFT

(11) **EP 1 814 746 B1**
(45) Veröffentlichungstag und Bekanntmachung des Hinweises auf die Patenterteilung: **15.07.2009**
(21) Anmeldenummer: 05793033.1
(22) Anmeldetag: 29.09.2005
(51) Int. Cl.: B60G 3/01, B60G 11/28

(54) **EINZELRADAUFHÄNGUNG EINES ZWEISPURIGEN FAHRZEUGS**
INDEPENDENT WHEEL SUSPENSION OF A TWO-TRACK VEHICLE
SUSPENSION DE ROUE INDEPENDANTE D'UN VEHICULE A DOUBLE VOIE

(30) Priorität: 07.10.2004 DE 102004048789
(43) Veröffentlichungstag der Anmeldung: 08.08.2007
(73) Patentinhaber: Bayerische Motoren Werke Aktiengesellschaft, 80809 München (DE)
(72) Erfinder: SEETHALER, Ludwig, 85241 Hebertshausen (DE); STENZENBERGER, Alfred, 86681 Fünfstetten (DE)
(86) Internationale Anmeldenummer: PCT/EP2005/010529
(87) Internationale Veröffentlichungsnummer: WO 2006/040017

(56) Entgegenhaltungen:
- EP-A- 1 418 068
- WO-A-03/091048
- DE-C- 613 775
- DE-C1- 19 634 895
- DE-U1- 29 519 108
- GB-A- 174 755
- GB-A- 191 215 983
- US-A- 1 984 694
- US-A- 2 156 580
- US-A- 2 992 013
- US-A- 4 875 706
- US-B1- 6 357 770

## Beschreibung

Die Erfindung betrifft eine Einzelradaufhängung eines zweispurigen Fahrzeugs, insbesondere Personenkraftwagens, mit Radführung durch körperlich ausgeführte Führungsbahn-Elemente in Zusammenwirken mit längs derselben verschiebbaren Führungselementen. Zum bekannten Stand der Technik wird neben den üblichen Einzelradaufhängungen mit Lenkern sowie neben der deutschen Patentschrift 613 775 oder dem US-Patent 2,992,013 insbesondere auf die DE 295 19 108 U1 verwiesen.

Herkömmliche Radaufhängungen erfüllen die kinematischen und elastokinematischen Anforderungen an die Führung des Fahrzeug-Rades mit kinematischen Ketten von Lenkern und Gelenken, die den Radträger und damit das Rad gegenüber dem Fahrzeug-Aufbau führen. Für hohe Ansprüche an Fahrdynamik und Fahrkomfort hat sich beispielsweise das Doppelquerlenker-Prinzip und dessen Varianten wie Raumlenker- oder Fünflenkerachsen durchgesetzt. Dabei ermöglicht die Anordnung der Lenker und Gelenke einerseits die Optimierung der kinematischen Kenngrößen (Sturz, Vorspur, Brems- und Anfahrstützwinkel, Rollzentrumshöhe und -änderung) und die Entkopplung von Unebenheiten, Stößen und akustischen Störungen andererseits. Über die gezielte Abstimmung der Elastizitäten in den Bauteilen und Gummilagern lässt sich darüber hinaus das Eigenlenkverhalten des Fahrzeugs unter äußeren Kräften steuern. Die Federung und Dämpfung der Radbewegung gegenüber dem Aufbau in Vertikalrichtung übernimmt im allgemeinen eine Stahl- oder Luftfeder in Kombination mit einem hydraulischen Teleskop-Stoßdämpfer in Ein- oder Zweirohrbauweise.

Die Bauteile der Radführung, nämlich die Lenker, Gelenke, Gummilager, etc. sowie die weiteren Elemente für die Federung und Dämpfung beanspruchen naturgemäß Bauraum, der insbesondere bei zweispurigen Fahrzeugen anderweitig genutzt werden könnte, bspw. im Bereich der Fahrzeug-Hinterachse für die Karosseriestruktur oder für die Abgasanlage des Fahrzeug-Antriebsaggregats oder für einen Kraftstoffbehälter hierfür. Ein eingeschränktes Innenraumangebot (Kofferraum, Rücksitzbank, Durchladebreite, etc.) ist die Folge. An (gelenkten) Vorderachsen wird durch Lenker und Federung/Dämpfung der Bauraum für die crashrelevanten Karosserielängsträger sowie die Einbaubreite für das Fzg.-Antriebsaggregat eingeschränkt. Auch der Wendekreis des Fahrzeugs ist vom notwendigen Freigang zu diesen Bauteilen betroffen. Darüber hinaus weisen die verwendeten Kugelgelenke insbesondere unter Last ein Losbrechmoment und Lagerreibung auf, die das Ansprechverhalten der Fahrzeug-Achse und damit den Fahrkomfort negativ beeinflussen. Auch die Gummilager können aus fahrdynamischen Gründen nicht immer so weich ausgelegt werden, wie es für eine gute akustische Entkopplung wünschenswert wäre.

Weiteren bekannten Stand der Technik bilden die beiden eingangs genannten, alten Schriften, die eine sog. Spindelführung zeigen. Dabei zeigt die deutsche Patentschrift 613 775 eine lenkbare Starrachse mit einer Radführung in Vertikalrichtung, die durch ein lineares im wesentlichen vertikal ausgerichtetes und mit dem Radträger starr verbundenes Führungsrohr gebildet wird, innerhalb dessen eine sich an der Starrachse abstützende Spindel längsverschiebbar geführt ist. Eine im Aufbau ähnliche Einzelradaufhängung ist im genannten US-Patent 2,992,013 gezeigt. Gemeinsam sind diesen Radführungen körperlich ausgeführte hier nun so genannte Führungsbahn-Elemente, längs derer Führungselemente verschiebbar sind. Jedoch können solchermaßen einfache, ja primitive Radführungen den heutigen kinematischen Anforderungen (selbstverständlich) nicht genügen.

Diesbezüglich günstiger ist eine im deutschen Gebrauchsmuster DE 295 19 108 U1 gezeigte Radaufhängung mit zwei vorliegend sog. Führungsbahnelementen, die sich im wesentlichen in Vertikalrichtung erstrecken und durch die oder an denen Führungselemente längs der Führungsbahn-Elemente längsverschieblich geführt sind. Jedoch ist die in dieser Schrift gezeigte Radaufhängung kinematisch überbestimmt und somit in der Praxis nicht funktionsfähig, da ein Verklemmen der Führungselemente gegenüber den Führungsbahn-Elementen auftreten kann.

Hiermit soll nun aufgezeigt werden, wie in Relation zu den heute üblichen lenkergeführten Einzelradaufhängungen deren geschilderte Probleme behoben werden können und insbesondere soll, nachdem hierbei auf das in der genannten DE 195 19 108 U1 gezeigte Prinzip zurückgegriffen wird, dieses Prinzip für einen realen Einsatz tauglich gemacht werden, d.h. es soll nicht nur eine funktionsfähige, sondern darüber hinaus günstige Radaufhängung mit zwei Führungsbahn-Elementen und darauf geführten Führungselementen aufgezeigt werden (= Aufgabe der vorliegenden Erfindung).

Die Lösung dieser Aufgabe ist für eine Radaufhängung nach dem Oberbegriff des Anspruchs 1 **dadurch gekennzeichnet, dass** dem hinter Radmitte liegenden Führungsbahn-Element zwei Führungselemente zugeordnet sind, die jeweils zwei Freiheitsgrade, nämlich in Fahrzeug-Querrichtung als auch in Fahrzeug-Längsrichtung, binden, während dem vor Radmitte liegenden Führungsbahn-Element nur ein einen in Fahrzeug-Querrichtung orientierten Freiheitsgrad bindendes Führungselement zugeordnet ist. Vorteilhafte Aus- und Weiterbildungen sind Inhalt der Unteransprüche.

Vorgeschlagen ist somit eine räumliche Führung des Rades bzw. eines diesem zugeordneten Radträgers praktisch in ähnlicher Weise wie von konventionellen Doppelquerlenkerachsen bekannt, jedoch abweichend hiervon nicht in Form einer virtuellen Führungsbahn, die durch kinematische Ketten von Lenkern und Gelenken definiert ist, sondern in Form von reellen Führungsbahnen bspw. bzw. vorzugsweise aus metallischem Werkstoff, an der entlang der Radträger (oder das Rad) über mechanische sog. Führungselemente wie Rollen, Wälz-, Gleitlager oder Kugelumlauf-Mechanismen positioniert und geführt wird. Dabei ist es möglich, die Führungsbahn(en) bzw. (ein) entsprechende(s) sog. Führungsbahn-Element(e) karosseriefest anzuordnen, d.h. dem Fahrzeug-Aufbau zuzuordnen und die zugehörigen, damit zusammenwirkenden Führungselemente demzufolge dem Radträger (bzw. Rad) zuzuordnen, oder als kinematische Umkehr hiervon karosseriefeste, dem Aufbau zugeordnete Führungselemente in Zusammenwirken mit dem Radträger zugeordneten Führungsbahn-Elementen vorzusehen.

Für die weitere Erläuterung werden zunächst Rollen als Führungselemente angenommen bzw. ein sog. Führungselement, das durch ein körperlich ausgeführtes Führungsbahnelement geführt wird, kann durch einen vorzugsweise mit dem Radträger verbundenen Träger gebildet sein, in dem als Rollen ausgebildete Wälzkörper gelagert sind, die ihrerseits auf dem Führungsbahn-Element abwälzen. Dann können die mechanischen Führungselemente bzw. Wälzkörper entweder zylindrische Rollen auf planen Führungsbahnen sein, wobei nur eine Belastung auf Druck möglich ist, so dass keine Querkräfte übertragen werden können und somit keine Seitenführungsfunktion vorliegt, oder es können bspw. tonnenförmige oder torusförmige Rollen in Führungsbahnen mit U-förmigem Querschnitt mit begrenzter Seitenführungsfunktion vorgesehen sein. Ausdrücklich sei an dieser Stelle darauf hingewiesen, dass alternativ zu einer Wälzlagerung der Führungselemente gegenüber den Führungsbahn-Elementen auch eine Gleitlagerung bzw. entsprechende Führung mit sog. Gleitelementen, die ebenfalls in einem Träger oder dgl. angeordnet sein können, realisiert werden kann.

Zurückkommend auf eine Wälzlagerung kann jeweils ein Paar von zylindrischen Rollen, die an gegenüberliegenden Seiten der Führungsbahn angeordnet sind, in Richtung der Berührnormalen Zug- und Druckkräfte aufnehmen. Dieses Paar von einander bezüglich dem Führungsbahn-Element gegenüber liegend angeordneten Rollen entspricht damit kinematisch einem Stablenker mit zwei Kugelgelenken in einer herkömmlichen Einzelradaufhängung mit Lenkern, der einen (als Zahlwort) Freiheitsgrad des gesamten Radführungsmechanismus fesselt. Ein Paar von tonnenförmigen oder torusförmigen Rollen kann Zug- und Druckkräfte in Richtung der Berührnormalen und zusätzlich begrenzt Querkräfte aufnehmen und ist damit in der Funktion einem konventionellen Dreiecks-Querlenker vergleichbar, vorausgesetzt die Querkräfte sind nicht zu hoch. Eine derartige Anordnung bindet dann zwei Freiheitsgrade. Für die grundsätzliche Anforderung, an einer Einzelradaufhängung fünf Freiheitsgrade zu binden (der sechste und damit nicht zu bindende Freiheitsgrad stellt die Ein- bzw. Ausfederbewegung des Aufbaus gegenüber dem Rade dar), sind also entweder fünf zylindrische Rollenpaare auf planen Führungsbahnen oder zwei tonnen- oder torusförmige Rollenpaare in bspw. U-förmigen Führungsbahnen mit zusätlich einem (als Zahlwort) zylindrischen Rollenpaar möglich. Für höhere Kraftniveaus in dem Bereich zwischen Radmitte und Radaufstandspunkt (d.h. bei einer durch Lenker gebildeten Einzelradaufhängung im Bereich der unteren Querlenkerebene) erscheint auch eine Kombination von drei zylindrischen Rollenpaaren und einem torus- oder tonnenförmigen Rollenpaar (dieses oberhalb von Mitte Rad angeordnet) sinnvoll. Eine weitere Variante der Rollenführung stellt im übrigen eine in einer Draufsicht bzw. im Querschnitt des Führungsbahn-Elementes sternförmige Anordnung von drei zylindrischen Rollen dar, die ebenfalls zwei Freiheitsgrade fesselt. Wie weiter oben ausgeführt sind auch hier mehrere Kombinationen zur Festlegung von insgesamt fünf Freiheitsgraden möglich.

Die Führungsbahnen, die durch die sog. Führungsbahn-Elemente gebildet werden, können je nach Ansprüchen an die Radaufhängung und die mechanische Bearbeitung im einfachsten Fall geradlinig, also linear verlaufen, oder eindimensional mit festem Radius gekrümmt sein, oder einen variablen Krümmungsradius aufweisen oder im allgemeinsten Fall mehrdimensional gekrümmt verlaufen. Im letzten Fall beschreibt der Radträger bei Verschiebung längs der Führungsbahn dann eine schraubenförmige Bewegungsbahn mit veränderlicher Steigung. Mit zunehmend komplexerer Bewegungsgeometrie lassen sich zunehmend mehr kinematische Kenngrößen unabhängig voneinander einstellen, allerdings zum Preis von aufwändigerer Fertigung. Für die Bearbeitung der Führungsbahnen ist von Bedeutung, ob es sich im Falle eines Wälzkontakts um eine Linien- oder eine Punktberührung handelt. Für hohe Lasten ist die Linienberührung günstiger, die allerdings eine genaue Bearbeitung der Laufflächen mit geringen Toleranzen erfordert. Reicht eine Punktberührung mit bspw. tonnenförmigen oder torusförmigen Rollen aus, ist diese u.a. aus Kostengründen vorteilhafter. Entsprechendes (mit flächiger Berührung anstelle Linienberührung) gilt, wenn anstelle von Wälzkörpern sog. Gleitelemente vorgesehen sind, die über eine Gleitlagerung mit den Führungsbahn-Elementen zusammenwirken.

Um eine kinematisch günstige bzw. den bekannten kinematischen Anforderungen (so bspw. hinsichtlich einfederungsabhängiger Veränderung von Spur und Sturz) entsprechende Führung des Rades zu erzielen und gleichzeitig günstige Kraftübertragungsverhältnisse zwischen jedem Führungsbahn-Element und den diesem zugeordneten Führungselementen zu erzielen, werden - abweichend vom eingangs genannten bekannten "alten" Stand der Technik - je Rad zumindest zwei Führungsbahn-Elemente vorgeschlagen, von denen jeweils zumindest eines vor und hinter Radmitte - in Fahrtrichtung des Fahrzeugs betrachtet - angeordnet ist. Beispielsweise kann vor und hinter Mitte Rad jeweils ein Führungsbahn-Element an einander gegenüberliegenden Seiten im Querschnitt U-förmige Laufflächen für torus- oder tonnenförmige Rollenpaare aufweisen, wobei die beiden Rollen an den einander zumindest im wesentlichen gegenüberliegenden Führungsbahnen des Führungsbahn-Elementes abwälzen. Dabei kann das (in Fahrtrichtung) hintere Führungsbahn-Element, das vorzugsweise möglichst knapp hinter Mitte Rad angeordnet ist, für höhere Lasten stärker dimensioniert sein und zwei Sätze von bspw. jeweils drei sternförmig angeordneten torus- oder tonnenförmigen Rollen mit ausreichend vertikalem Abstand für gute Seiten- und Längskraftabstützung führen. Das vordere Führungsbahn-Element kann dann weniger stark dimensioniert sein und nur ein Rollenpaar tragen, das im wesentlichen Kräfte quer zur Fahrtrichtung abstützt. Die Funktion dieser vorderen Führungsbahn ist dann mit derjenigen einer konventionellen Spurstange vergleichbar, die den Vorspurverlauf über dem Federweg steuert.

Bei räumlich gekrümmten Führungsbahnen bzw. Führungsbahn-Elementen kann sich durch die ebenfalls räumliche Bewegung des Radträgers ein Toleranzproblem hinsichtlich der Bearbeitung der Führungselemente bzw. von deren Wälzkörpern oder auch Gleitelementen sowie der Führungsbahnen als solchen auftreten. Für ein verzwängungsfreies Abrollen der Wälzkörper sind grundsätzlich enge Fertigungstoleranzen notwendig. Alternativ dazu können die Rollen oder dgl. aber auch mit einer definierten Elastizität oder Gelenkigkeit (bspw. in Kombination mit einem Kugelgelenk) gelagert werden, um Verspannungen und Klemmen zu vermeiden. Eine gummielastische Lagerung, d.h. über Gummilager, kann dabei zusätzlich zur Entkopplung von Schwingungen und Stößen beitragen. Dabei kann diese Lagerung zwischen den Wälzkörpern (bspw. Rollen) oder Gleitelementen und einem Träger-Element für diese vorgesehen sein oder -im Falle eines aufbaufesten Führungsbahn-Elementes - zwischen einem solchen Träger-Element und dem Radträger oder einem mit diesem verbundenen Element.

Im Falle einer angetriebenen Fahrzeug-Achse wird der Raum zwischen den Führungsbahn-Elementen eines Rades beim Ein- und Ausfedern von der Abtriebswelle durchsetzt. Für nicht angetriebene Achsen ist eine kompaktere Anordnung der (beiden) Führungsbahn-Elemente möglich. In diesem Fall kann nämlich der gesamte oder mindestens der obere Teil des durch die Führungsbahn-Elemente und die Führungselemente gebildeten Führungsmechanismus innerhalb des Luftfederbalgs einer als Tragfeder (zwischen Rad und Fahrzeugaufbau) fungierenden Luftfeder angeordnet werden, dessen oberes Ende aufbau- bzw. karosserieseitig und dessen unteres Ende radträgerseitig befestigt ist. Vorteilhafterweise sind die Elemente des hiermit vorgeschlagenen Führungsmechanismus auf diese Weise vor Verschmutzung geschützt. Eine besonders kompakte Bauweise wird dann erreicht, wenn nicht nur die der Einzelradaufhängung zugeordnete Tragfeder (insbesondere Luftfeder) und der vorgeschlagenen Führungsmechanismus ineinander quasi "verschachtelt" bzw. im wesentlichen konzentrisch angeordnet werden, sondern - im Falle einer Luftfeder - auch noch die Dämpfungsfunktion innerhalb des Luftfederbauraums realisiert wird. Hierfür kann das Luftfedervolumen durch eine Membran unterteilt und diese Membran mit Ventilen ausgestattet sein, so dass bei Federungs-Bewegungen die Drosselverluste der durchströmenden Luft an den Ventilen zur Dämpfung genutzt werden können.

Falls als Tragfeder eine (konventionelle) Stahl-Wendel- oder Schraubenfeder vorgesehen und hierzu parallel ein hydraulischer Schwingungsdämpfer angeordnet ist, so ist eine Anordnung dieser Elemente in der Nähe des hinteren Führungsbahn-Elementes besonders günstig, wobei die Tragfeder und der Schwingungsdämpfer nicht höher als das Führungsbahn-Element bauen sollte, um den nutzbaren Bauraum für Karosseriestruktur und Innenraum möglichst wenig einzuschränken. Durch die Anlenkung der Tragfeder an den Führungselementen des vorgeschlagenen Führungsmechanismus ergibt sich ein Übersetzungsverhältnis nahe zu "eins", was sich günstig auf Kraftniveau, Gewicht und Ansprechverhalten auswirkt.

Für eine lenkbare Ausführung eines hiermit vorgeschlagenen Führungsmechanismus bzw. einer entsprechenden Einzelradaufhängung (insbesondere an einer Fzg.-Vorderachse) kann der gesamte Führungsmechanismus (bestehend insbesondere aus den Führungsbahn-Elementen und den zugehörigen Führungselementen) über zwei Kugelgelenke oder ein Scharniergelenk drehbar am Fahrzeug-Aufbau befestigt sein. Die Lenkbewegung selbst kann dann durch ein konventionelles Lenkgetriebe mit Spurstange oder durch einen separaten Lenkaktuator radindividuell ausgeführt werden. Für eine lenkbare Ausführung ist jedoch auch eine Kombination einer möglichst nahe der Rad-Mitte vorgesehenen Führungsbahn mit einer über ein Lenkgetriebe betätigten konventionellen Spurstange möglich, wodurch keine aufwändige Aufhängung der kompletten Radführung an zusätzlichen Drehgelenken erforderlich ist. Auf diese beschriebenen Arten ist auch eine Hinterradlenkung an einem Fahrzeug darstellbar, aus Bauraum- und Sicherheitsgründen vorzugsweise mit geringeren Lenkeinschlägen. Insbesondere für kleinere Lenkwinkel (und somit auch für einen Einsatz bei einer lenkbaren Hinterachse) ist der Einbau eines geeigneten Lenk-Aktuators, bspw. in Form eines Verstellexzenters oder eines Spindeltriebs, in oder an der am weitesten von der Rad-Mitte entfernt liegenden Führungsbahn möglich. Dies reduziert den Bauraumbedarf und den zu erbringenden Aufwand. Im übrigen lässt sich auch eine aktive Sturzverstellung an einer erfindungsgemäßen Radaufhängung realisieren, und zwar in vorteilhafter Weise durch Einbau oder Anbau eines geeigneten Verstellmechanismus in die nahe der Rad-Mitte befindliche Führungsbahn.

Zur Erzielung von elastokinematischen Effekten und zur weiteren Entkopplung von Störungen ist eine Kombination eines hiermit vorgeschlagenen Führungsmechanismus bzw. einer entsprechenden Einzelradaufhängung mit Gummilagern vorstellbar, die zwischen dem Führungsmechanismus und dem Fahrzeug-Aufbau (der Karosserie) vorgesehen sind. Im Unterschied zu konventionellen Lenker-Gummilagern haben diese Gummilager aber keine Gelenkfunktion mehr, da sie keinen Bewegungsfreiheitsgrad zur Verfügung stellen müssen, und können somit ausschließlich auf Belange der akustischen Isolierung ausgelegt werden. Durch gezielte Anordnung können jedoch Lenkeffekte unter äußeren Kräften erreicht werden, bspw. ein Untersteuereffekt an der Hinterachse durch ein Gummilagerelement vor und zwei Gummilagerelemente hinter der Radmitte.

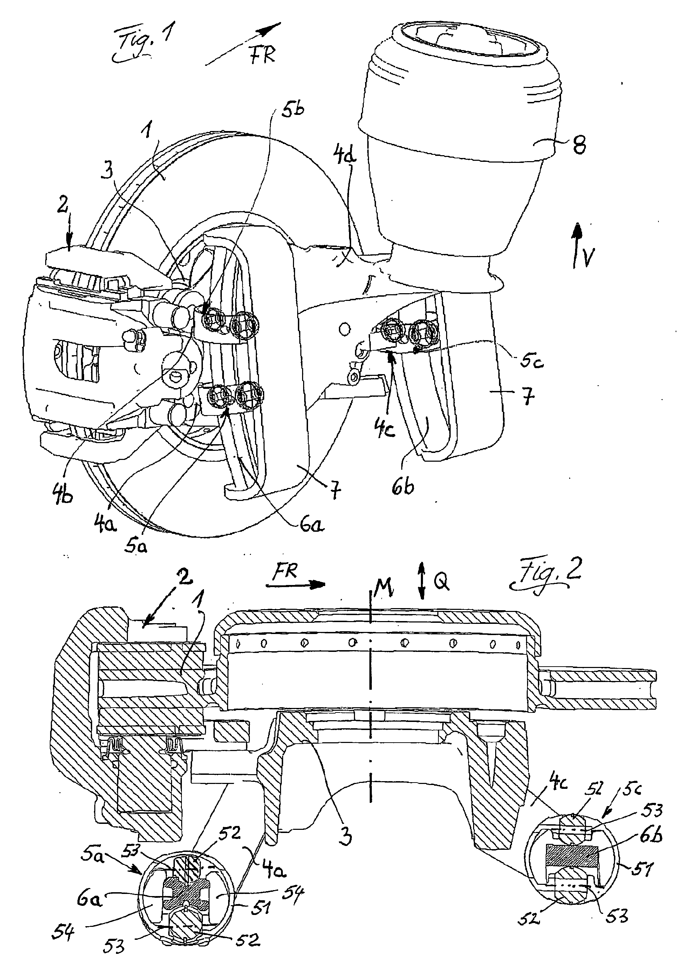

Die beigefügte Figur 1 zeigt (als ein bevorzugtes Ausführungsbeispiel) eine erfindungsgemäße Radführung bzw. Einzelradaufhängung eines Kraftfahrzeugs (PKW's) in einer dreidimensionalen Darstellung bzw. Ansicht von innen, d.h. vom nicht dargestellten Aufbau eines zweispurigen Kraftfahrzeugs auf dieses selbst nicht dargestellte Rad, von welchem stattdessen eine (wie üblich angebrachte) Bremsscheibe 1 mit zugehörigem Bremssattel 2 dargestellt ist. Am Rade bzw. an dieser Einzelradaufhängung entspricht die Vertikalrichtung V der Vertikalrichtung des Zeichnungsblattes.
Figur 2 zeigt einen annähernd horizontal verlaufenden Schnitt durch das untere der beiden dem Bremssattel 2 benachbarten (hinteren) Führungselemente sowie durch das vordere Führungselement, wobei in beiden Figuren die übliche Fahrtrichtung des Fahrzeugs durch einen Pfeil FR dargestellt ist.

Der Radträger für das (nicht gezeigte Rad) ist mit der Bezugsziffer 3 gekennzeichnet und trägt über einen Arm 4d ein Luftfederelement 8 mit integriertem und daher nicht sichtbarem Dämpfer, auf dem sich der Fahrzeug-Aufbau abstützt. Ferner sind am Radträger 3 über weitere nur teilweise sichtbare Arme 4a, 4b, 4c insgesamt drei sog. Führungselemente 5a, 5b, 5c befestigt, wobei jeweils ein Arm ein solches Führungselement, auf dessen bzw. auf deren Aufbau an späterer Stelle noch näher eingegangen wird, trägt. Durch die beiden in Fahrtrichtung FR betrachtet hinteren Führungselemente 5a, 5b hindurch verläuft im wesentlichen in Vertikalrichtung V ein körperlich ausgeführtes sog. Führungsbahn-Element 6a, das über einen Haltebügel 7, der an den beiden Enden des Führungsbahn-Elementes 6 angreift, am Fahrzeug-Aufbau befestigt ist (nicht dargestellt). In ähnlicher Weise verläuft durch das in Fahrtrichtung FR betrachtet vordere Führungselement 5c hindurch im wesentlichen in Vertikalrichtung V ein weiteres körperlich ausgeführtes Führungsbahn-Element 6b, das ebenfalls über einen (anderen) Haltebügel 7, der an den beiden Enden des Führungsbahn-Elementes 6b angreift, am Fahrzeug-Aufbau befestigt ist.

Bei den (hier beiden) Führungsbahn-Elementen 6a, 6b handelt es sich um vorzugsweise metallische, beliebig gekrümmt verlaufende stabförmige und dabei im wesentlichen in Vertikalrichtung ausgerichtete Bauteile, die sich in ihrem Querschnitt unterscheiden, wie Figur 2 zeigt. Aus Figur 2 geht auch der grundsätzliche Aufbau der mit den Führungsbahn-Elementen zusammenwirkenden Führungselemente 5a bzw. 5c hervor. Demnach besteht jedes der Führungselemente 5a, 5b, 5c aus einem ringförmigen Träger 51 und ist mit diesem am jeweiligen Arm 4a bzw. 4b bzw. 4c des Radträgers 3 befestigt. In jedem Träger 51 sind einander gegenüberliegend zwei Wälzkörper 52 um ihre Drehachse 53 verdrehbar gelagert, wobei die Anordnung so getroffen ist, dass diese beiden Wälzkörper 52 an einander gegenüberliegenden Seiten des jeweiligen Führungsbahn-Elementes 6a bzw. 6b, das zwischen diesen Wälzkörpern 52 hindurch verläuft, anliegen.

Im in Fahrtrichtung FR betrachtet vorderen Führungselement 5c sind zwei tonnenförmige Wälzkörper 52 vorgesehen, die jeweils auf einer planen Fläche des im Querschnitt rechteckigen Führungsbahn-Elementes 6b anliegen bzw. abwälzen. Eine Kraftübertragung zwischen dem Führungsbahn-Element 6b und dem Führungselement 5c ist somit nur in Horizontalrichtung in der zur Fahrtrichtung senkrechten Fahrzeug-Querrichtung (Pfeil Q) möglich. Im in Fahrtrichtung FR betrachtet hinteren Führungselement 5a sind ebenfalls zwei tonnenförmige Wälzkörper 52 vorgesehen und dabei anders als im vorderen Führungselement 5c gelagert, nämlich über einen sog. Käfig 54, der seinerseits am Träger 51 befestigt ist, wobei hier das Führungsbahn-Element 6a an seinen den Wälzkörpern 52 zugewandten Seiten einen annähernd U-förmigen Querschnitt besitzt, so dass die (ebenfalls) im wesentlichen tonnenförmigen Wälzkörper 52 sowohl in Fahrzeug-Querrichtung Q als auch in Fahrzeug-Längsrichtung, d.h. in bzw. gegen Fahrtrichtung FR in der Horizontalebene Kräfte auf das Führungsbahn-Element 6a übertragen können. Über die Wälzkörper 52 wird somit jedes Führungselement 5a bzw. 5b bzw. 5c bei einer Verlagerung des Fzg.-Aufbaus gegenüber dem Radträger 2 in Vertikalrichtung V gegenüber dem bzw. entlang dem jeweiligen Führungsbahn-Element 6a bzw. 6b bzw. auf der durch dessen Formgebung festgelegten Führungsbahn geführt.

Bei einer im wesentlichen vertikalen Bewegung des Fzg.-Rades gegenüber dem Fzg.-Aufbau kann somit durch entsprechende Formgebung der Führungsbahn-Elemente 6a, 6b die jeweils gewünschte RadführungsKinematik (Sturz, Vorspur, Brems- und Anfahrstützwinkel, Rollzentrumshöhe und -änderung) auf relativ einfache Weise erzielt werden. Tatsächlich sind nämlich durch die gezeigte und soweit beschriebene Einzelrad-Aufhängung fünf räumliche Freiheitsgrade des Rades bzw. des Radträgers 3 gebunden, während der sechste Freiheitsgrad, nämlich in Vertikalrichtung V, frei ist. Dabei bindet das vordere Führungselement 5c einen (als Zahlwort) Freiheitsgrad, nämlich für sich betrachtet nur in Fzg.-Querrichtung Q, während jedes der hinteren Führungselemente 5a bzw. 5b jeweils zwei Freiheitsgrade bindet, nämlich jeweils für sich sowohl in Fzg.-Querrichtung Q als auch in Fzg.-Längsrichtung, d.h. in bzw. gegen Fahrtrichtung FR.

Beim hier gezeigten Ausführungsbeispiel ist der obere Abschnitt des vorderen Führungsbahn-Elementes 5c in den unteren Bereich des Innenraumes des Luftfederelementes 8 integriert (vgl. Fig.1), jedoch kann dies sowie eine Vielzahl weiterer Details insbesondere konstruktiver Art durchaus abweichend von obigen Erläuterungen gestaltet sein, ohne den Inhalt der Patentansprüche zu verlassen. Insbesondere ist die Gestaltung der Führungsbahnen bzw. Führungsbahn-Elemente 6a bzw. 6 und der zugeordneten Führungselemente 5a, 5b, 5c auch andersartig möglich, und zwar (auch) im Hinblick auf eine bestmögliche Kraftübertragung von Längskräften (in bzw. gegen Fahrtrichtung wirkend) und Querkräften (in bzw. gegen Fahrzeug-Querrichtung Q wirkend). Stets erzielt man jedoch die (wesentlichen) Vorteile einer solchen erfindungsgemäßen Einzelradaufhängung, nämlich bei Umsetzung einer günstigen Radführungskinematik insbesondere Bauraumvorteile gegenüber dem bislang üblichen Stand der Technik durch Entfall von Lenkern, Gelenken und ggf. Hinterachsträgern. Hierdurch wird ein erhöhtes Innenraumangebot und eine verbesserte Karosseriestruktur ermöglicht. Es kann sich ein nennenswerter Gewichtsvorteil einstellen, ferner können weiterhin noch verbaute Gummilager ausschließlich im Hinblick auf Isolationszwecke und für elastokinematische Effekte ausgelegt werden, nachdem in diesen keine Gelenkfunktion mehr notwendig ist. Auch kann ein gutes Ansprechverhalten wegen fehlender Losbrechmomente und geringer Reibmomente erzielt werden.

## Patentansprüche

1. Einzelradaufhängung eines zweispurigen Fahrzeugs, insbesondere Personenkraftwagens, mit Radführung durch zumindest zwei körperlich ausgeführte Führungsbahn-Elemente (6a, 6b) in Zusammenwirken mit längs derselben verschiebbaren Führungselementen (5a, 5b, 5c), wobei vor und hinter Radmitte (M) jeweils zumindest ein sich im wesentlichen in Vertikalrichtung (V) erstreckendes Führungsbahn-Element (6a, 6b) vorgesehen ist, wobei dem hinter Radmitte (M) liegenden Führungsbahn-Element (6a) zwei Führungselemente (5a, 5b) zugeordnet sind, die jeweils zwei Freiheitsgrade, nämlich in Fahrzeug-Querrichtung als auch in Fahrzeug-Längsrichtung, binden, **dadurch gekennzeichnet, dass** dem vor Radmitte (M) liegenden Führungsbahn-Element (6b) nur ein einen in Fahrzeug-Querrichtung orientierten Freiheitsgrad bindendes Führungselement (5c) zugeordnet ist.

2. Einzelradaufhängung nach Anspruch 1,
**dadurch gekennzeichnet, dass** die Führungsbahn-Elemente (6a, 6b) linear oder gekrümmt mit konstanter oder sich längs der Führungsbahn ändernder Krümmung ausgeführt sind.

3. Einzelradaufhängung nach Anspruch 1 oder 2, wobei zwischen den Führungselementen (5a, 5b, 5c) und den Führungsbahnelementen eine Wälzlagerung, vorgesehen ist,
**dadurch gekennzeichnet, dass** die Führungselemente (5a, 5b, 5c) in einem Träger (51) gelagerte tonnenförmige Wälzkörper (52) aufweisen.

4. Einzelradaufhängung nach Anspruch 1 oder 2,
**dadurch gekennzeichnet, dass** ein Führungselement (5a, 5b, 5c) zwei oder drei Gleitelemente oder drei Wälzkörper (52) aufweist, die an einander im wesentlichen oder annähernd gegenüberliegenden Seiten des Führungsbahn-Elementes (6a, 6b) anliegen.

5. Einzelradaufhängung nach einem der vorangegangenen Ansprüche,
**dadurch gekennzeichnet, dass** die mit dem Gleitelement oder Wälzkörper (52) oder allgemein dem Führungselement (5a, 5b, 5c) zusammenwirkende Fläche des Führungsbahn-Elementes (6a, 6b) gewölbt ausgebildet ist oder einen annährend u-förmigen Querschnitt aufweist und dass das jeweilige Führungselement (5a, 5b, 5c) oder Gleitelement oder der zugeordnete Wälzkörper (52) hieran angepasst geformt ist, so dass im Falle von Wälzkörpern (52) an mehreren Stellen im wesentlichen eine Punktberührung vorliegt, was eine Kraftübertragung in mehreren Richtungen ermöglicht.

6. Einzelradaufhängung nach einem der vorangegangenen Ansprüche,
**dadurch gekennzeichnet, dass** das oder die Führungsbahn-Element(e) (6a, 6b) mit den Führungselementen (5a, 5b, 5c) zumindest teilweise innerhalb eines als Luftfeder (8) ausgebildeten Tragfederelements angeordnet ist.

7. Einzelradaufhängung nach einem der vorangegangenen Ansprüche,
**dadurch gekennzeichnet, dass** die Funktion eines Dämpfers von dem als Luftfeder (8) ausgebildeten Tragfederelement übernommen wird, das hierzu geeignet ausgebildet ist, mit einer Unterteilung des Luftfedervolumens in zwei Volumina, die über Dämpfungsventile miteinander in Verbindung stehen.

## Claims

1. An individual wheel suspension of a two-track vehicle, especially a passenger car, with wheel guidance by means of at least two solid guide path elements (6a, 6b) in cooperation with guide elements (5a, 5b, 5c) that can be displaced along them, at least one guide path element (6a, 6b) substantially extending in the vertical direction (V) being provided in each case in front of and behind the wheel centre (M), wherein two guide elements (5a, 5b) are associated with the guide path element (6a) located behind the wheel centre (M), which in each case fix two degrees of freedom, namely in the transverse direction of the vehicle and also in the longitudinal direction of the vehicle, **characterised in that** only one guide element (5c) fixing one degree of freedom oriented in the transverse direction of the vehicle is associated with the guide path element (6b) located in front of the wheel centre (M).

2. An individual wheel suspension according to claim 1, **characterised in that** the guide path elements (6a, 6b) are linear or curved with a constant curvature or a curvature changing along the guide path.

3. An Individual wheel suspension according to claim 1 or 2, a roller bearing being provided between the guide elements (5a, 5b, 5c) and the guide path elements, **characterised in that** the guide elements (5a, 5b, 5c) have barrel-shaped roller bearings (52) mounted in a carrier (51).

4. An individual wheel suspension according to claim 1 or 2, **characterised in that** a guide element (5a, 5b, 5c) has two or three slide elements or three rolling bodies (52), which rest on sides, which substantially or virtually oppose one another, of the guide path element (6a, 6b).

5. An individual wheel suspension according to any one of the preceding claims, **characterised in that** the face of the guide path element (6a, 6b) cooperating with the slide element or rolling body (52), or generally the guide element (5a, 5b, 5c), is curved or has a virtually U-shaped cross-section and **in that** the respective guide element (5a, 5b, 5c) or slide element or the associated rolling body (52) is formed adapted thereto, so a point contact substantially exists in the case of rolling bodies (52) at a plurality of points, and this allows a force transmission in a plurality of directions.

6. An individual wheel suspension according to any one of the preceding claims, **characterised in that** the guide path element(s) (6a, 6b) with the guide elements (5a, 5b, 5c) is at least partially arranged within a bearing spring element configured as an air spring (8).

7. An individual wheel suspension according to any one of the preceding claims, **characterised in that** the function of a damper is adopted by the bearing spring element configured as an air spring (8), which is suitably configured for this, with a division of the air spring volume into two volumes, which are connected to one another by means of damping valves.

## Revendications

1. Suspension de roue indépendante d'un véhicule à double voie, notamment d'un véhicule de tourisme comportant un guidage de roue par au moins deux éléments de chemin de guidage (6a, 6b) réalisés matériellement en coopérant avec des éléments de guidage (5a, 5b, 5c) coulissant le long de ces éléments de chemin de guidage, et
devant et derrière le centre de roue (M), il est prévu chaque fois au moins un élément de chemin de guidage (6a, 6b) qui s'étend pratiquement dans la direction verticale (V),
l'élément de chemin de guidage (6a) situé derrière le milieu de roue (M), comporte deux éléments de guidage (5a, 5b) ayant respectivement deux degrés de liberté, à savoir dans la direction transversale du véhicule et aussi dans sa direction longitudinale,
**caractérisée en ce que**
l'élément de chemin de guidage (6b) situé devant le milieu de roue (M), ne comporte qu'un élément de guidage (5c) avec un degré de liberté orienté dans la direction transversale du véhicule.

2. Suspension de roue indépendante selon la revendication 1,
**caractérisée en ce que**
les éléments de chemin de guidage (6a, 6b) sont réalisés de façon droite ou cintrée avec une courbure constante ou variable le long du chemin de guidage.

3. Suspension de roue indépendante selon la revendication 1 ou 2, comportant un montage à roulement entre les éléments de guidage (5a, 5b, 5c) et les éléments de chemin de guidage,
**caractérisée en ce que**
les éléments de guidage (5a, 5b, 5c) ont des organes de roulement (52) en forme de barillets logés dans un support (51).

4. Suspension de roue indépendante selon la revendication 1 ou 2,
**caractérisée en ce qu'**
un élément de guidage (5a, 5b, 5c) comporte deux ou trois éléments de glissement ou trois organes de roulement (52) appliqués pratiquement ou sensiblement contre les côtés opposés de l'élément de chemin de guidage (6a, 6b).

5. Suspension de roue indépendante selon l'une des revendications précédentes,
**caractérisée en ce que**
la surface de l'élément de chemin de guidage (6a, 6b) coopérant avec l'élément de glissement ou avec l'organe de roulement (52) et de manière générale avec l'élément de guidage (5a, 5b, 5c) a une forme bombée ou une section sensiblement en forme de U, et
l'élément de guidage (5a, 5b, 5c) respectif ou l'élément de glissement ou l'organe de roulement (52) associés, ont une forme adaptée de sorte que dans le cas d'organes de roulement (52) prévus à plusieurs endroits, on a pratiquement un contact ponctuel permettant la transmission des efforts dans plusieurs directions.

6. Suspension de roue indépendante selon l'une des revendications précédentes,
**caractérisée en ce que**
le ou les éléments de chemin de guidage (6a, 6b) avec les éléments de guidage (5a, 5b, 5c), sont prévus au moins en partie dans un élément de ressort de support réalisé sous la forme d'un ressort à air (8).

7. Suspension de roue indépendante selon l'une des revendications précédentes,
**caractérisée en ce que**
la fonction d'amortisseur est assurée par l'élément de support sous la forme d'un ressort à air (8) réalisé de manière appropriée avec subdivision de son volume, en deux volumes communiquant par des soupapes d'amortissement.
